Europäisches Patentamt

European Patent Office

Office européen des brevets

(19)

(11) Veröffentlichungsnummer: **0 200 760**
**B1**

(12) EUROPÄISCHE PATENTSCHRIFT

(45) Veröffentlichungstag der Patentschrift :
07.06.89

(51) Int. Cl.⁴ : **A 47 F   3/12, E 06 B   3/60**

(21) Anmeldenummer : 85905403.3

(22) Anmeldetag : 12.10.85

(86) Internationale Anmeldenummer :
PCT/EP 85/00535

(87) Internationale Veröffentlichungsnummer :
WO/8602245 (24.04.86 Gazette 86/09)

(54) PROFILSTANGE ZUM FESTKLEMMEN VON PLATTEN, INSBESONDERE VON GLASPLATTEN, FÜR SCHAUVITRINEN, VERKAUFSTHEKEN, MESSEMOBILIAR OD.DGL.

(30) Priorität : 19.10.84 DE 3438365

(43) Veröffentlichungstag der Anmeldung :
12.11.86 Patentblatt 86/46

(45) Bekanntmachung des Hinweises auf die Patenterteilung : 07.06.89 Patentblatt 89/23

(84) Benannte Vertragsstaaten :
AT BE CH DE FR GB IT LI LU NL SE

(56) Entgegenhaltungen :
BE--A--   627 501
DE--B--   875 435
DE--B-- 1 237 287
FR--A--   413 917
US--A-- 3 477 182

(73) Patentinhaber : Raumtechnik Schober KG
Wittumstrasse 3
D-7302 Ostfildern 1 (Ruit) (DE)

(72) Erfinder : STENEMANN, Bruno
Freiherr-vom-Stein-Str. 17
D-4702 Beckum (DE)

(74) Vertreter : Jackisch, Walter, Dipl.-Ing. et al
Patentanwalt W. Jackisch & Partner Menzelstrasse
40
D-7000 Stuttgart 1 (DE)

## Beschreibung

Die Erfindung bezieht sich auf eine Profilstange der im Oberbegriff des Anspruches 1 angegebenen Art.

Gegenüber anderen Plattenbefestigungen mit Druckleisten (DE-C-875 435) haben die Profilstangen den Vorteil einer wirkungsvolleren und bequemeren Plattenbefestigung. Solche Profilstangen sind als Griffleisten für Frontplatten von Verkaufstheken bekannt und besitzen eine Nut zur Aufnahme des Plattenrands mit einer Nut-Erweiterung, die sich zum Nutgrund hin verbreitet und zur Lagerung einer Druckleiste mit keilförmigem Querschnitt dient, deren Keilspitze der Eintrittsöffnung der Nut zugekehrt ist. In der Nuterweiterung, im Bereich des Nutgrunds befindet sich eine Gewindebohrung, worin eine Druckschraube verstellbar ist, welche auf eine den Keilquerschnitt begrenzende Stoßfläche der Druckleiste trifft. Die Druckrichtung der auf die Druckleiste einwirkenden Druckschraube verläuft hier parallel zur Plattenebene, weshalb die von der Druckschraube ausgeübte Kraft umgelenkt und nur mit einer kleinen Kraftkomponente zum Festklemmen der eingeführten Platte genutzt wird. Weil beim Klemmvorgang die Druckleiste in Richtung der Nutöffnung sich bewegt, weshalb die Gefahr besteht, daß die Platte mitgenommen und dadurch zunehmend aus der Nut herausgedrückt wird. Es ist nicht sichergestellt, daß die Platte stets in der vollen gewünschten Tiefe in der Nut der Profilstange festgehalten wird.

Die genannten Nachteile gelten im wesentlichen auch für die durch die DE-B-1 237 287 bekannte Profilstange der im Oberbegriff des Anspruchs genannten Art zur Befestigung einer zwischen zwei Dichtungsstreifen aus elastischem Kunststoff gelagerten Glasscheibe bzw. Platte. Bei dieser ist die Scheibe bzw. Platte in einem Metallprofilrahmen gelagert, der rechtwinklige Profilleisten hat, die mit einem Schenkel gegen einen Dichtungsstreifen unter Preßdruck anliegen. Am Profilrahmen ist eine sich annähernd über die ganze Höhe des Dichtungsstreifens erstreckende Stützleiste sowie eine Profilleiste vorgesehen. Die Stützleiste stützt sich mit Keilwirkung unmittelbar oder unter Zwischenschaltung einer Keilleiste an der Stützleiste ab, wobei die Preßwirkung durch im Profilrahmen verschraubbare Schrauben erzielt wird, welche die Profilleiste bzw. die Keilleiste verschieben.

Der Erfindung liegt demgegenüber die Aufgabe zugrunde, eine preiswerte Profilstange der im Oberbegriff des Anspruches 1 genannten Art zu entwickeln, bei der über eine einfache und bequeme Handhabung die Platte sich zuverlässig und besonders fest in der Nut festklemmen läßt. Dies wird erfindungsgemäß durch die im Kennzeichen des Anspruches 1 angeführten Maßnahmen erreicht, denen folgende Bedeutung zukommt:

Weil die Druckrichtung der Schraube parallel zur Leitfläche der Druckleiste verläuft, ergibt sich eine besonders hohe auf die Platte ausgeübte Klemmkraft. Diese entsteht bereits bei leichtem Anzug der Schraube, weshalb eine Deformation der Bauteile nicht zu befürchten ist. Die von der Druckschraube ausgeübte Kraft wird voll zum Festklemmen der Platte ausgenutzt. Bei dieser Lage der Druckrichtung ergibt sich auch eine besonders bequeme Betätigung der Druckschraube, denn das Werkzeug zum Spannen bzw. Entspannen der Schraube verläuft dann schräg zur Plattenebene und die Platte behindert dadurch nicht die das Werkzeug betätigende Hand. Weil der Bereich der Keilspitze zum Nutgrund zugekehrt ist und die zur Führung der keilförmigen Druckleiste dienende Leitfläche der Nut-Erweiterung divergierend zur Plattenebene verläuft, ist die Druckleiste beim Festspannen der Schraube bestrebt, sich möglichst tief in die Nut hineinzubewegen und nimmt auf diesem Weg die Platte mit. Je fester man die Druckschraube anzieht, umso mehr wird die Platte gegen den Nutgrund gedrückt. Dadurch ist eine zuverlässige Festklemmung der Platte mit hoher Klemmkraft gewährleistet. Besondere Ausführungsformen der Erfindung sind in den abhängigen Ansprüchen 2-19 aufgeführt.

Durch die Maßnahmen des Anspruches 2 können die unterschiedlichen Funktionen der Druckleiste optimiert werden. Dort, wo der Druck ausgeübt wird, verwendet man hartes Material, während in den übrigen Bereichen, wo beispielsweise nur Dichtungsfunktionen vorgesehen sind, weicheres und daher auch leichter verformbares Material verwendet wird. Dieser Maßnahme kommt, unabhängig vom Anspruch 1, selbständige patentbegründende Bedeutung zu. Gemäß Anspruch 3 läßt sich dies auch auf Druckleisten aus Kunststoff, wie PVC, anwenden, die in besonders preiswerter Weise gemäß Anspruch 4 herzustellen sind.

Anspruch 5 bringt den Vorteil, daß die Druckleisten trotz der Erweiterungen der Nut nicht herausfallen oder in eine falsche Position gelangen können, wenn keine Platte in der Nut steckt. Damit ist es möglich, bereits bei der Herstellung die Profilstange mit der Druckleiste auszurüsten. Auch ein Verkanten der Druckleiste bei leerer Nut ist nicht zu befürchten; die eingeführte Platte wird stets von einer ordnungsgemäß positionierten Druckleiste festgeklemmt. Hierfür gibt es verschiedene Maßnahmen, die auch gleichzeitig angewendet werden können.

Eine erste Möglichkeit zur Positionssicherung liefert der Anspruch 6, der hierfür einen flexiblen Lappen vorschlägt. Es können die im vorerwähnten Anspruch 2 angeführten Maßnahmen für unterschiedlichen Materialaufbau gemäß Anspruch 7 dabei angewendet werden. Nach Anspruch 8 kann ein solcher Lappen auch als weicher Anschlag für die eingeführte Platte dienen. Wegen guter Positionssicherung wird man einen verhältnismäßig langen Lappen anwenden, der durch die Werkstoffverformung beim Klemmen sich auch noch verlängern kann, jedoch durch die Aussparung nach Anspruch 9 lassen sich störende Überschußlängen beseitigen. Dies kann durch Faltenlegung gemäß Anspruch 12 erfolgen. Um dies zu begünstigen, empfiehlt es sich, gemäß Anspruch 10, an der Ansatzstelle des Lappens eine Hinterschneidung vorzusehen. Besonders günstig ist dabei, dem Lappen die in Anspruch 11 angeführte Winkelform zu geben und seinen Fuß-Bereich mit in den keilförmigen Umrißbereich einzubeziehen.

Eine weitere Möglichkeit der Positionssicherung besteht durch die in Anspruch 13 angegebene Profilnase, die aber, im Gegensatz zum flexiblen Lappen, formsteif ist. Dadurch kann sie auch noch Führungsfunktionen beim Bewegen der Druckleiste ausführen, wenn man die Maßnahmen des Anspruches 14 dabei anwendet.

Besonders bewährt hat sich die Formgebung der Druckleiste gemäß Anspruch 15 in Form eines rechtwinkligen, gleichschenkeligen Dreiecks. Dabei wird, gemäß Anspruch 16, die Ansatzstelle des Lappens in den Dreiecksbereich integriert und der Nase der Verlauf nach Anspruch 17 in diesem Dreieck gegeben. Die Formgebung der Nase nach Anspruch 18 ist besonders vorteilhaft, weil damit die Stabilität der Nase erhöht ist.

Die erfindungsgemäße Profilstange kann zusätzlich mit einer Deckschiene gemäß Anspruch 19 ausgerüstet sein, die über ein teilweises oder volles Eingreifen in die Nut daran befestigt werden kann, z. B. durch eine Schnappverbindung. Diese Deckschiene macht die Betätigungsstellen der Druckschraube in der Profilstange unsichtbar und kann vorteilhaft auch zugleich zum Abstützen von Fachböden in dem Möbel dienen.

Anstelle einer Platte lassen sich, gemäß Anspruch 20, auch U-Profil-Schienen mit der Profilstange verbinden, wenn man ihre Schenkel entsprechend dem Umriß der Druckleiste formt. Zu ihrer Befestigung kann dann auch die Druckschraube verwendet werden.

In den Zeichnungen ist die Erfindung in mehreren Ausführungsbeispielen dargestellt. Es zeigen :

Fig. 1, in Vergrößerung, den Querschnitt durch eine erfindungsgemäße Profilstange mit einer darin festgeklemmten und einer daraus entfernten Platte,

Fig. 2, in stärkerer Vergrößerung, den Querschnitt einer bei der erfindungsgemäßen Profilstange verwendeten Druckleiste,

Fig. 3 und 4 in annähernd natürlicher Größe die Querschnitte von zwei verschiedenen alternativ bei der erfindungsgemäßen Profilstange von Fig. 1 verwendbaren Deckschienen,

Fig. 5 in perspektivischer Darstellung einen Anwendungsfall der erfindungsgemäßen Profilstange als Ecksäule in einem Möbel mit dem in Fig. 3 und 4 gezeigten Zubehör,

Fig. 6 eine alternative Form für einen oberendigen Bestandteil der Ecksäule von Fig. 5,

Fig. 7 in Explosionsdarstellung eine alternative Form für einen unteren Bestandteil der Ecksäule von Fig. 5,

Fig. 8 eine der Fig. 1 entsprechende Querschnittansicht durch eine Profilstange mit einer darin eingeführten U-Profil-Schiene

Fig. 9 die Vorderansicht auf die in Fig. 8 gezeigte Profilstange, worin die U-Profil-Schiene als Lochschiene ausgebildet ist,

Fig. 10 in perspektivischer Ansicht die Profilstange in ihrer Anwendung gemäß Fig. 8 und 9, worin die Anwendungsmöglichkeiten der Lochschiene näher erläutert sind und

Fig. 11 bis 14 perspektivische Darstellungen bzw. Ansichten von Möbeln, die mit der erfindungsgemäßen Profilstange unter Verwendung von Platten aufgebaut werden können.

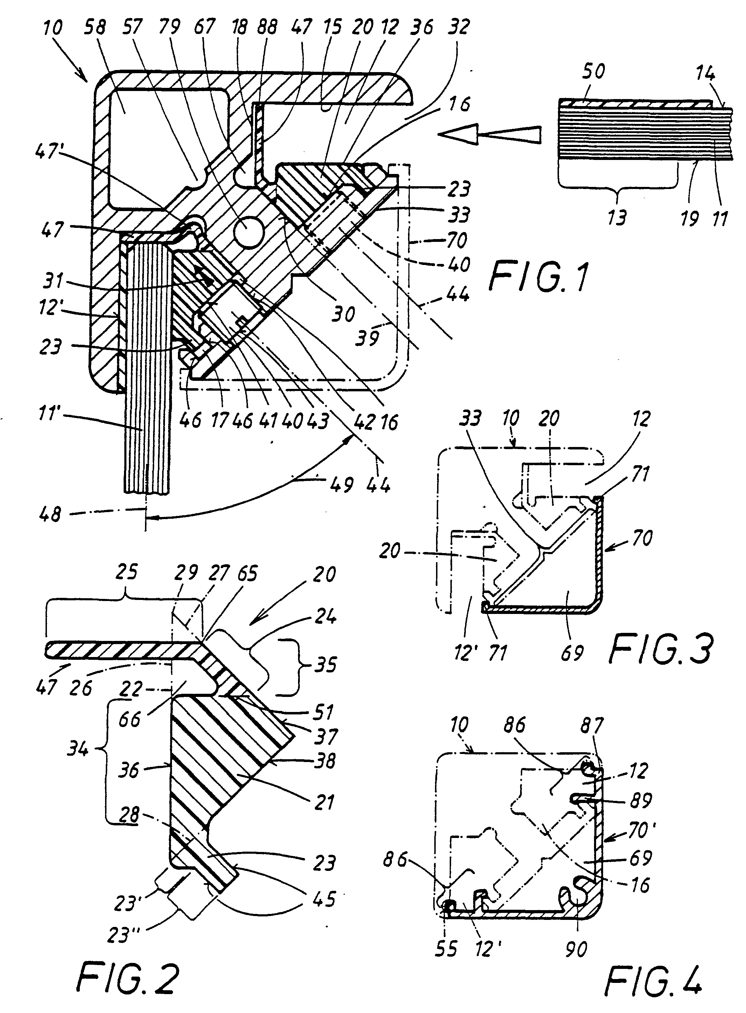

In Fig. 1 ist die Profilstange 10 zur Eckverbindung von zwei Platten 11, 11' eingerichtet, weshalb sie mit zwei längsverlaufenden Nuten 12, 12' ausgerüstet ist, die zueinander gleich ausgebildet sind und daher die Beschreibung einer Nut 12 und ihrer Bestandteile genügt.

Die Nut 12 dient zur Aufnahme eines Randes 13 der Platte 11 in gewünschter Tiefe, wobei an der einen Plattenseite 14 eine von der Profilstange selbst gebildete ortsfeste Nutwand 15 anliegt. Auf der gegenüberliegenden Seite befindet sich in der Profilstange eine Nut-Erweiterung 16, in welcher eine Druckleiste 20 mit dem aus Fig. 2 ersichtlichen Querschnitt 21 gelagert ist, der folgendes Aussehen hat :

Die Druckleiste 20 hat zunächst den mit Strichpunktlinien in Fig. 2 umrissenen keilförmigen Grundquerschnitt 22, nämlich den eines gleichschenkeligen rechtwinkeligen Dreiecks. Aus diesem Dreieck 22 ragt einerseits das Endstück 25 eines Profil-Lappens 47 und andererseits eine Profil-Nase 23 heraus. Die Druckleiste 20 besteht grundsätzlich aus zwei Zonen 34, 35, die, ausweislich der unterschiedlichen Schraffur in Fig. 2, aus zueinander unterschiedlichem Material bestehen. Als Material ist Kunststoff, nämlich PVC verwendet, allerdings mit unterschiedlicher Härte. Die den eigentlichen Keil-Querschnitt 22 bestimmende Kernzone 34 besteht aus verhältnismäßig hartem Material, nämlich PVC der Härte « 100 Shore ». Die andere bildet hierzu eine Randzone 35, die aus demgegenüber weicherem Material besteht, nämlich PVC mit der Härte « 70 Shore ». Beide Zonen 34, 35 sind an ihrer Berührungsstelle 51 durch Kleben oder Schweißen fest miteinander verbunden. Dadurch entsteht zwar eine aus den beiden unterschiedlichen Zonen 34, 35 kombinierte, aber doch einstückige Druckleiste 20. Ihre Herstellung erfolgt durch sogenannte Co-Extrusion. Dazu werden die beiden Zonen 34, 35 zunächst voneinander getrennt extrudiert, aber gleich anschließend zusammengeführt und durch ein gemeinsames Werkzeug gedrückt, wodurch es an der Berührungsstelle 51 zu einer festen dauerhaften Verbindung kommt.

Der Lappen 47 ist in sich abgewinkelt ausgebildet. An der erwähnten Berührungsstelle 51 beginnt ein in Richtung der ersten Kathete 27 des Dreiecks zunächst verlaufendes Fußstück 24 des Lappens, an welches, über einen Knickpunkt 65 ein senkrecht zur Hypotenuse 26 des Dreiecks verlaufendes freies Endstück 25 des Lappens 47 sich anschließt. An der Ansatzstelle 51 des Fußstücks 24 entsteht dadurch eine Hinterschneidung 66 zwischen dem Lappen 47 und der aus hartem Werkstoff bestehenden Kernzone 34. Für die noch zu erläuternde Keilwirkung ist die Hypotenuse 33 und die genannte erste Kathete 27 maßgeblich, welche den Bereich der hier nicht körperlich vorhandenen Keilspitze 29 bestimmen, wie Fig. 2 zeigt. Dieser Lappen 47 sowie die oben erwähnte Profil-Nase 23 dienen zur Positionssicherung der Druckleiste 20 in der Nut 12, wie sich aus folgendem ergibt:

Im Montagezustand gemäß Fig. 4 verläuft der Lappen 47 im Bereich des Nutgrunds 18 quer zum Nutverlauf und stützt sich mit seiner Lappenspitze 88 an der ortsfesten Nutwand ab. Dadurch wird die Druckleiste 20, auch, wenn die Platte 11 nicht in der Nut 12 sich befindet, in der genannten Nut-Erweiterung 16 gehalten. Gleichzeitig greift die Profil-Nase 23 in einen Aussparung 17 der Nut-Erweiterung 16 ein.

Wie aus Fig. 1 und 2 hervorgeht, erhebt sich die Profil-Nase 23 über die andere Kathete 28 zunächst mit einem trapezförmigen Profilfußstück 23', das schließlich in ein Profilendstück 23" mit parallelen, ebenen Seitenflächen 45 übergeht. Im Montagefall, gemäß Fig. 1, liegen diese Seitenflächen 45 an ebenen Flanken 46 des genannten Aussparung 17 an, weshalb hier außer der Halterung der Druckleiste 20 auch noch eine Führungswirkung beim noch näher zu beschreibenden Bewegen der Druckleiste 20 entsteht. Eine weitere Positionssicherung tritt ein, weil die Druckleiste 20 mit ihrer von der ersten Kathete 27 bestimmten Keilfläche 37 an einer ebenen, schräg zur Nut 12 verlaufenden Leitfläche 30 anliegt, deren Verlaufsrichtung in Fig. 1 durch die strichpunktierte Hilfslinie 39 verdeutlicht ist.

Die andere Kathete 28 des Keil-Dreiecks 22, welche der Keilspitze 29 gegenüberliegt, bildet eine « Stoßfläche 38 » für das aus Fig. 1 ersichtliche Schaftende 41 einer Schraube 40, welche in einer Gewindebohrung 42 in der die Nut-Erweiterung 16 begrenzenden Profilwand von 10 verschraubbar ist. Die Schrauben 40 ragen mit ihren Betätigungsenden 43 in den Raumbereich zwischen den beiden montierten Platten 11, 11' und sind dort durch ein von Hand zu bedienendes Werkzeug, wie einen Schraubenzieher, bequem zugänglich, weil die Wirkungslinie 44 der Schraube 40 mit der strichpunktiert eingezeichneten Ebene 48 beider Platten 11, 11' stets einen Winkel 49 von 45° einschließt. Die strichpunktiert in Fig. 1 eingezeichnete Wirkungslinie 44 ist durch die Achse der Schraube 40 bestimmt und soll als « Druckrichtung 44 » der Schraube 40 bezeichnet werden. Beim Einschrauben drückt das Schaftende 41 gegen die Stoßfläche 38 und bewegt dadurch die Druckleiste 20 im Sinne des Pfeils 31 von Fig. 1. Dadurch wird die Druckleiste 20 mit ihrer einen Keilfläche 37 längs der erwähnten Leitfläche 30 in der Nut-Erweiterung 16 verschoben, weshalb diese Keilfläche als « Gleitfläche 37 » bezeichnet werden kann. Aus Fig. 1 ergibt sich, daß die Verlaufsrichtung 39 der Leitfläche 30 (und damit der ihr anliegenden Gleitfläche 37) parallel zur Druckrichtung 44 der Schraube 40 angeordnet ist. Beim Anziehen der Druckschraube 40 bewegt sich folglich die Druckleiste 20 mit ihrer Keilspitze 29 tiefer gegen den Nutgrund 18. Dabei wirkt die an der Hypotenuse 22 dieses Dreiecks befindliche andere Keilfläche 36 als « Klemmfläche » gegen die eingeführte Platte 11' und erzeugt die in der Nut 12 erkennbare, bewegliche Nutwand 36, die an der gegenüberliegenden Plattenseite 19 zu liegen kommt.

Wie aus Fig. 1 hervorgeht, wird im Randbereich 13 die einzuführende Platte 11 auf ihrer Seite 14, die der erwähnten Klemmfläche 36 gegenüberliegt, mit einer weichen Auflage 50 versehen, z. B. einem Kunststoffband, das durch Klebstoff mit der Platte 11 verbunden sein kann. Dann wird die Platte 11 in die Nut 12 eingeschoben, bis die Stirnkante der Platte 11 an den querverlaufenden Lappen 47 im Nutgrund 18 stößt. Dadurch entsteht hier eine weiche Anschlagfläche für das Plattenende. Beim Festziehen der Druckschraube 40 nimmt die Druckleiste 20 bei ihrer Bewegung 31 die eingeführte Platte 11 mit und drückt sie zunehmend gegen den Lappen 47. Beim Verschieben 31 der Druckleiste 20 entsteht am Lappen 47 eine Überschußlänge, die als Falte 47' in eine Aussparung 67 eingedrückt wird, welche sich im Nutgrund 18 befindet.

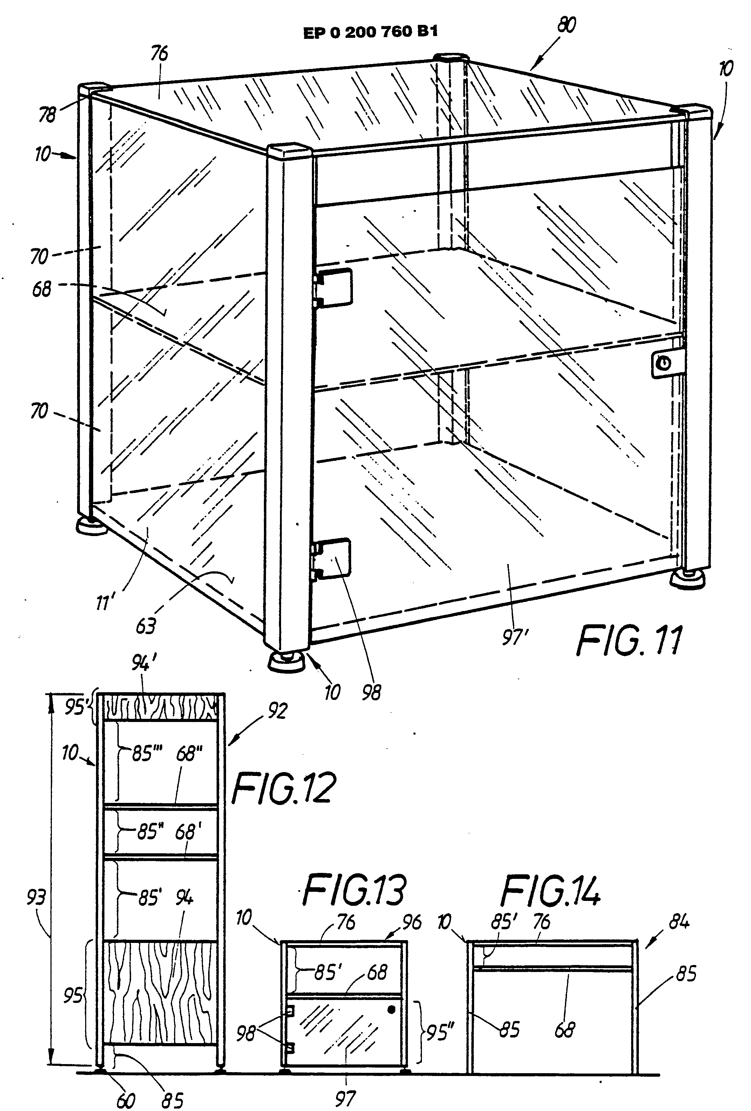

Mit der Profilstange 10 lassen sich verschiedene Möbel gemäß Fig. 11 bis 14 herstellen, denen folgendes gemeinsam ist:

Die Profilstangen 10 bilden vertikale Säulen in den Eckbereichen, zwischen denen sowohl vertikale als auch horizontale Platten angeordnet werden können. Querverlaufende metallische Traversen sind nicht erforderlich.

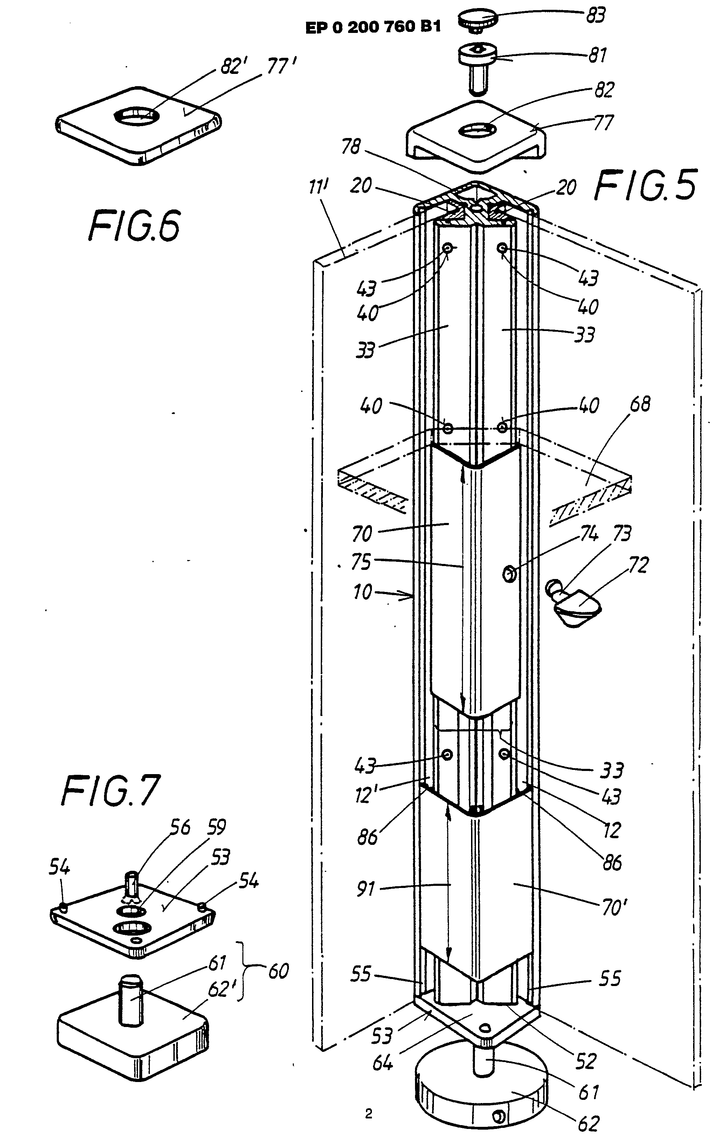

Verwendet man Glasplatten, wie im Fall der Fig. 11, so ist der Durchblick, bis auf die Ecksäulen 10, durch nichts behindert. Fig. 5 bis 7 zeigt den Aufbau einer solchen Glasvitrine 80 von Fig. 11. Es können dabei natürlich auch abgewandelte Formen der gezeigten Profilstange 10 verwendet werden, bei denen, anstelle der in Fig. 1 gezeigten 90°-Position, die beiden Platten 11, 11' in einem stumpfen oder spitzen Winkel zueinander verlaufen. Ferner ist es möglich, in der Profilstange 10 mehr als zwei oder auch weniger als zwei Nuten 12, 12' zur Aufnahme von Platten vorzusehen. In jedem Fall hat aber jede Platte 11 ihre eigene Nut 12, ihre eigene Druckleiste 20 und eigene Druckschrauben 40. Anstelle von Druckschrauben 40 könnten natürlich auch andere Spannmittel für die Bewegung 31 der zugehörigen Druckleiste 20 verwendet werden, wie z. B. hinter der Stoßfläche 38 einfahrende Keile.

Eine aus der Profilstange 10 abgeschnittene Säule wird an ihrem unteren Stirnende 52 mit einer aus Fig. 7 erkennbaren Unterkappe 53 versehen. Diese besitzt Eckstifte 54, die im Montagefall in die Enden von Rinnen 55 eingreifen, welche in alternativen Profilstangen 10 gemäß Fig. 4 und 5 zu erkennen sind. Die Unterkappe 53 hat gemäß Fig. 7 mehrere Bohrungen. Durch die äußere Bohrung ist eine Verbindungsschraube 56 geführt, die in eine kreisförmige Aussparung 57 eines Hohlraums 58 der Profilstange 10 eingreift. Durch eine Zentralbohrung 59 greift der Gewindeschaft 61 eines höhenverstellbaren Fußes 60, der gemäß Fig. 5 oder 7 unterschiedliche Fußplatten 62, 62' aufweisen kann. Der Gewindeschaft 61 ist zur Höheneinstellung des Fußes 60 in einer mit Gewinde versehenen Zentralbohrung 79 der Profilstange 10 verschraubbar.

Im Falle der Fig. 11 wird eine Bodenplatte 63 unmittelbar auf dem in Fig. 5 erkennbaren freien Eckbereich 64 der Unterkappe 53 aufgelegt. Damit sich die Bodenplatte 63 nicht abheben kann, wird auf diese eine Deckschiene 70 abgestützt, deren Profil in Fig. 3 und strichpunktiert in Fig. 1 zu sehen ist. Die Deckschiene 70 verkleidet die Innenseite 33 der Profilstange 10 und macht die Betätigungsenden 43 der Druckschrauben 40 unsichtbar. Die Deckschiene 70 hat Winkelprofil und komplettiert die Profilstange 10 zu einem rechteckförmigen Querschnitt. Es entsteht ein Hohlraum 69, worin elektrische Leitungen od. dgl. verlegt werden können. Die Anbringung der Deckschiene 10 kann über eine Schnappverbindung erfolgen, wozu Randteile 71 vorgesehen sind, die in entsprechende Absätze der Nut eingreifen, so daß daneben, wie aus Fig. 1 hervorgeht, die Nutöffnung 32 zum Einführen einer Platte 11 frei bleibt. Die Deckschiene 70 kann aus elastischem Material, wie Aluminium oder Kunststoff bestehen. Die Deckschiene 70 hat eine definierte Länge 75 und hat die weitere Funktion, mit ihrem oberen Ende, gemäß Fig. 11, als Stütze für eine weitere Bodenplatte 68, zu dienen. Die Platte 68 hat gemäß Fig. 5 abgeschnittene Eckbereiche, die zwar den genannten Schienen-Hohlraum 69 überdecken, aber vor der Innenseite 33 der durchgehenden Profilstange 10 enden.

Die Glasvitrine 80 von Fig. 11 ist schließlich mit einer oberen Deckplatte 76 versehen, die durch ein weiteres Teilstück einer Deckschiene 70 in der gleichen Weise wie die genannte Bodenplatte 68 abgestützt wird. Zu ihrer Halterung können die aus Fig. 5 und 6 ersichtlichen Oberkappen 77 bzw. 77' verwendet werden, von denen die eine 77 mit einem abwärts gezogenen Rand versehen ist, während die andere 77' flach ausgebildet ist. Bei der Oberkappe 77 kann die Deckplatte 76 am oberen Stirnende 78 der Profilstange 10 aufliegen, während bei der flachen Oberkappe 77' die Deckplatte 76 einen Eckausschnitt wie die genannte Bodenplatte 68 besitzt. Die Befestigung der Oberkappen 77, 77' erfolgt durch Schrauben 81, welche Bohrungen 82 bzw. 82' durchgreifen und in der bereits erwähnten Zentralbohrung 79 der Profilstange 10 festschraubbar sind. Der Kopf der Schraube 81 kann durch einen Deckel 83 verkleidet sein.

An den Deckschienen 70 lassen sich, wie Fig. 5 verdeutlicht, auch noch Bodenhalter 72 befestigen, die mit ihren Enden 73 in Löcher 74 der Deckschiene 70 eingreifen. Damit lassen sich auch noch nicht näher gezeigte Zwischenböden in der Glasvitrine 80 von Fig. 11 anordnen. Die Länge 75 der einzelnen Deckschienenteile 70 bestimmt dagegen den Abstand zwischen den vorgenormten Boden- und Deckplatten 63, 68 und 76.

Sofern Standbeine 85, wie beim Tischmöbel 84 gemäß Fig. 14 erzeugt werden sollen, verwendet man alternative Deckschienen 70', deren Funktion und Aufbau aus den Fig. 4 und 5 entnommen werden können. Gegenüber der vorhergehenden Deckschiene 70 besitzen sie verbreiterte Randteile 86, die nach Art eines Stopfens die Nutöffnungen 32 verschließen. Die Anbringung an der Profilstange 10 kann auch hier durch eine Schnappverbindung erfolgen, wozu Vorsprünge 87, 89 an den Randteilen 86 vorgesehen sind, die mit der genannten Rille 55 und dem Spalt 17 in der Profilstange 10 zusammenwirken. Weil bei der Deckschiene 70' keine Platten zu befestigen sind, können die Druckleisten 20 weggelassen werden, wie auch aus Fig. 4 hervorgeht. Im Scheitelbereich der Deckschiene 70' kann eine Aussparung 90 vorgesehen sein, die eine Befestigungsschraube aufnimmt, wenn beispielsweise eine Bodenplatte 68 beim Tischmöbel 84 von Fig. 14 auf das untere Stück des Standbeins 85 gesetzt werden soll.

Ausgehend von einer über die ganze Länge 93 eines Möbels durchlaufenden Profilstange 10 kann durch geeignete Bemessung und Auswahl der beiden Deckschienen 70 bzw. 70' abschnittweise die Funktion eines Standbeins oder einer Verbindungssäule für Platten erlangt werden, wie anhand des Schrankmöbels 92 von Fig. 12 zu erkennen ist. Nach den Füßen 60 folgt zunächst ein kurzes Standbein 85, das durch eine entsprechend kurz bemessene Deckschiene 70' dabei erzeugt wird. Auf dieser befindet sich eine nicht näher erkennbare Bodenplatte. Dann schließt sich ein erster Abschnitt als Verbindungssäule 95 an zur Befestigung von Holzplatten 94. In diesem Abschnitt wird daher die andere Deckschiene 70 gemäß Fig. 3 verwendet, die eine entsprechende Länge 75 aufweist. In diesem Abschnitt 95 sind natürlich Druckleisten 20 vorgesehen, die in ihrer Höhenposition durch die darunter befindlichen Deckschienen 70 im Standbein-Abschnitt 95 gehalten werden, denn bei der Deckschiene 70' greifen die Vorsprünge 89 in den Bereich der Nut-Erweiterung 16 ein und stützen daher ihrerseits die darüber im Abschnitt 95 befindliche Druckleiste 20. Durch entsprechende Längenbemessungen 75 bzw. 91 der beiden Deckschienen 70, 70' folgen daraufhin im Schrankmöbel zunächst drei Standbein-Abschnitte 85', 85'' und 85''', zwischen denen die Deckschienen 70' jeweils Bodenplatten 68', 68'' positionieren, und schließlich folgt wieder ein Abschnitt einer Verbindungssäule 95' zum Festklemmen von Holzleisten 94'.

Im Falle der Fig. 13 ist eine Kommode 96 gezeigt, die in ihrem unteren Abschnitt zunächst eine Verbindungssäule 95' für nicht erkennbare Wandplatten besitzt. Im vorderen Bereich befindet sich eine Tür 97 mit Scharnieren 98, die durch Festklemmung der dortigen Druckleiste in der Nut der zugehörigen Profilstange 10 festgehalten werden. Dies geschieht auch sinngemäß bei der Glasvitrine 80 von Fig. 1 mit der dortigen Glastür 97'. In diesem Säulenabschnitt 95" werden wieder entsprechend lange Deckschienen 70 gemäß Fig. 3 verwendet. Dann folgt ein Abschnitt 85' in Form eines Standbeins, weshalb hier die Deckschiene 70' nach Fig. 4 verwendet wird. Dazwischen befindet sich wieder eine Bodenplatte 68 und die Kommode 96 ist durch eine Deckplatte 76 oben abgeschlossen. Einen vergleichbaren Aufbau hat auch das bereits erwähnte Tischmöbel 84 von Fig. 14, wo aber in den beiden Standbein-Abschnitten 85, 85' nur die Deckschienen 70' gemäß Fig. 4 Verwendung finden.

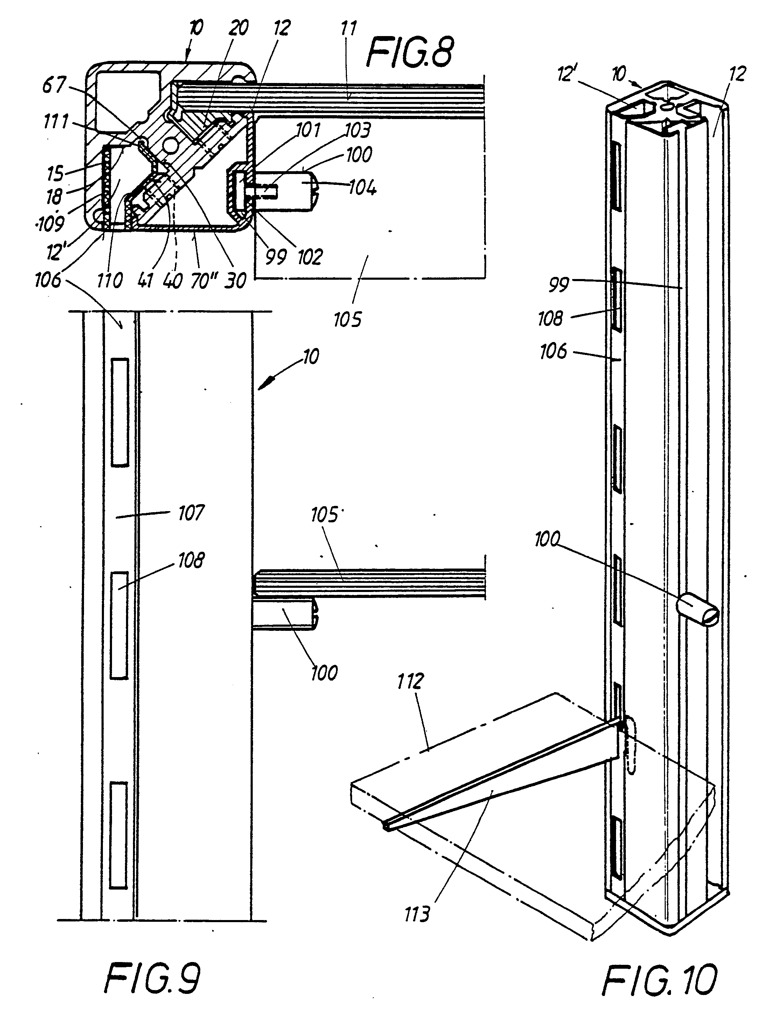

In den Fig. 8 bis 10 ist eine weitere Variante einer Deckschiene 70" gezeigt, die hinsichtlich ihrer Randteile gemäß der Deckschiene 70 gestaltet ist und daher die Befestigung von Platten 11 zuläßt. Diese Deckschiene 70" besitzt aber eine hinterschnittene Längsnut 99 zur Aufnahme von Zwischenbodenhaltern 100, die aus einem hammerkopfartigen Befestigungsteil 101 mit Gewindeschaft 103 bestehen, auf welchen eine Gewindebüchse 104 aufschraubbar ist. Zwischen dem Hammerkopf des Befestigungsteils 101 einerseits und der Stirnfläche der Gewindebuchse 104 andererseits wird die Nutwand 102 durch Verschrauben der Gewindebuchse 104 festgeklemmt. Der Zwischenbodenhalter 100 ist dadurch in einer bestimmten Höhenlage festgesetzt und kann zur Abstützung eines Zwischenbodens 105 dienen. In den Fig. 8 bis 10 ist in die andere Nut 12' eine U-Profil-Schiene 106 eingefügt, die dort von der Druckschraube 40 festgehalten wird. Der eine Schenkel 109 ist im wesentlichen eben und liegt an der ortsfesten Nutwand 105 der Profilstange 10 an. Der andere U-Schenkel 110 dagegen ist verkröpft entsprechend einem Teil-Umriß der Druckleiste 20. Es entsteht daher auch hier eine Stoßfläche, an welcher die Druckschraube 40 angreifen kann. Die Schenkelspitze 111 kann dabei ein Widerlager in der Aussparung 67 am Nutgrund 18 finden. Im vorliegenden Fall ist der U-Scheitel 107 der Schiene 106 mit Langlöchern 108 versehen, worin bekannte Tragarme 113 mit ihrem Hakenende eingeführt werden können. Die Tragarme 113 können dabei einen in Fig. 10 angedeuteten Fachboden 112 halten. Mit solchen Schienen 70" und 106 läßt sich die Variationsvielfalt der Möbel gemäß Fig. 11 bis 14 noch weiter erhöhen.

## Patentansprüche

1. Profilstange (10) zum Festklemmen von Platten (11, 11'), insbesondere von Glasplatten, für Schauvitrinen, Verkaufstheken, Messemobiliar od. dgl., umfassend wenigstens eine längsverlaufende Aussparung (12, 16) mit zwei zueinander im Winkel stehenden ebenen Profilwänden (15, 30), von denen die eine Profilwand als Leitfläche (30) dient beim Verschieben einer im Querschnitt keilförmig profilierten Druckleiste (20) mittels einer in der Profilstange (10) verschraubbaren Schraube (40), wobei die Druckleiste (20) mit ihrem die Keilspitze (29) aufweisenden Bereich dem Grund der Aussparung (12, 16) zugekehrt ist und sich mit ihrer einen als Gleitfläche (37) dienenden Keilfläche auf dieser Leitfläche (30) verschieblich abstützt, und die andere Keilfläche (36) der Druckleiste (20) als parallel verstellbare Klemmfläche (36) dient und mit der anderen ortsfesten Profilwand eine parallel begrenzte Nut (12; 12') veränderlicher Weite zur Aufnahme eines Randes (13) der Platte (11; 11') bildet, dadurch gekennzeichnet, daß die Eintrittsöffnung (32) der Nut (12) durch die freie Kante einer von der Leitfläche (30) ausgehenden Wand begrenzt ist, die mit der Leitfläche (30) eine dreieckförmig profilierte Nuterweiterung (16) zur Aufnahme der keilförmigen Druckleiste (20) bildet, daß diese Wand mit durchgehenden Gewindebohrungen (42) für eine Druckschraube (40) versehen ist, diese Druckschraube (40) auf eine die beiden Keilflächen (36, 37) der Druckleiste verbindende Stoßfläche (38) drückt und ihre Druckrichtung (44) parallel (39) zur Leitfläche (30; 39) verläuft, und daß zur Positionssicherung der Druckleiste (20) in der Nuterweiterung (16) der Keilquerschnitt (22) mit im Nutbereich (12; 16) sich abstützenden Anformungen (23, 47) versehen ist, von denen eine Anformung (23) formsteif ist und wenigstens bereichsweise (23") parallel zur Leitfläche (30; 39) verläuft und führungswirksam in einer komplementären, ebenfalls parallel zur Leitfläche (30; 39) in der von der Leitfläche (30) ausgehenden Wand angeordneten Aussparung (17) aufgenommen ist.

2. Profilstange insbesondere nach Anspruch 1, dadurch gekennzeichnet, daß die Druckleiste (20) zonenweise (34, 35) aus unterschiedlichem Material aufgebaut ist, nämlich mit einer Kernzone (34) aus verhältnismäßig hartem Material und mit wenigstens einer Randzone (35) aus dem gegenüber weicheren Material (vergl. Fig. 2).

3. Profilstange nach Anspruch 2, dadurch gekennzeichnet, daß die Profilleiste (10) in ihrer Kern- und Randzone (34, 35) aus zwei, zueinander unterschiedliche Shore-Härten aufweisenden Kunststoffen, wie PVC, besteht und die beiden Zonen (34, 35) an ihrer Berührungsstelle (51) miteinander verklebt bzw. verschweißt sind und dadurch eine einstückige Druckleiste (40) bilden.

4. Profilstange nach Anspruch 2 oder 3, dadurch gekennzeichnet, daß die Druckleiste (20) mit ihren beiden Zonen (34, 35) durch Co-Extrusion erzeugt ist, umfassend eine abgestimmte, nebeneinander erfolgende Extrusion beider Zonen (34, 35) mit einer anschließenden Zusammenführung der Zonen in einem gemeinsamen, den Gesamtquerschnitt (21) der Druckleiste (20) aufweisenden Werkzeug.

5. Profilstange nach einem oder mehreren der Ansprüche 1 bis 4, dadurch gekennzeichnet, daß die Druckleiste (20) positionsgesichert in der Nut-Erweiterung (16) gehaltert ist.

6. Profilstange nach einem oder mehreren der Ansprüche 1 bis 5, dadurch gekennzeichnet, daß die eine Ausformung (47) als eine aus dem keilförmigen Grundquerschnitt (22) der Druckleiste (20) herausragender, flexibler Lappen (47) ausgebildet ist, der im Montagefall wenigstens abschnittweise (25) quer zur Nut (12, 12') verläuft.

7. Profilstange nach einem oder mehreren der Ansprüche 2 bis 6, dadurch gekennzeichnet, daß der Lappen (47) die aus weichem Material bestehende Randzone (35) bildet und der keilförmige Grundquerschnitt (22) die im wesentlichen aus hartem Material bestehende Kernzone (34) der Druckleiste (20) erzeugt.

8. Profilstange nach Anspruch 6 oder 7, dadurch gekennzeichnet, daß der Lappen (47) vor dem Nutgrund (18) verläuft und dort eine insbesondere weiche Anlagefläche für die in die Nut (12') eingeführte Schmalseite der Platte (11') bildet.

9. Profilstange nach Anspruch 6, 7 oder 8, dadurch gekennzeichnet, daß die Nut (12, 12') bzw. ihre Erweiterung (16), insbesondere im Bereich des Nutgrunds (18), mit einer Aussparung (67) versehen ist, in welche (67) — im Klemmzustand der Druckleiste (20) an der Platte (11') — der flexible Lappen bereichsweise (47') eingedrückt ist.

10. Profilstange nach einem oder mehreren der Ansprüche 6 bis 9, dadurch gekennzeichnet, daß der Lappen an seiner Ansatzstelle (51) am keilförmigen Grundquerschnitt (22) der Druckleiste (20) eine Hinterschneidung (66) besitzt.

11. Profilstange nach einem oder mehreren der Ansprüche 6 bis 10, dadurch gekennzeichnet, daß der Lappen (47) an seiner, insbesondere zur Keilspitze (29) hin gerichteten Ansatzstelle (51) zunächst ein im Umrißbereich des keilförmigen Grundquerschnitts (22) verlaufendes Fußstück (24) besitzt und an das Fußstück (24) sich ein freies Endstück (25) des Lappens (47) anschließt, welches quer, insbesondere senkrecht, zur Klemmfläche (36) des keilförmigen Grundquerschnitts (22) verläuft.

12. Profilstange nach einem oder mehreren der Ansprüche 6 bis 11, dadurch gekennzeichnet, daß — im Klemmzustand der Druckleiste (20) an der Platte (11') — der Lappen (47), insbesondere im Bereich seiner Hinterschneidung (66), zu einer Falte (47') verformbar ist.

13. Profilstange nach einem der Ansprüche 1-12, dadurch gekennzeichnet, daß die Anformung eine Nase (23) ist und im wesentlichen in Druckrichtung (44) der Druckschraube (40) verläuft und ebene Seitenflächen (45) aufweist, die an ebenen Flanken (46) des sie aufnehmenden Spalts (17) anliegen.

14. Profilstange nach einem oder mehreren der Ansprüche 1 bis 13, dadurch gekennzeichnet, daß der keilförmige Grundquerschnitt (22) der Druckleiste (20) im wesentlichen als gleichschenkeliges, rechtwinkeliges Dreieck ausgebildet ist, wobei von den Dreieckseiten die Hypotenuse (26) die gegen die Platte (11) drückende Klemmfläche (36) erzeugt, die dem Nutgrund (18) zugekehrte erste Kathete (27) die an der Leitfläche (30) der Profilstange (10) längsgeführte Gleitfläche (37) bildet und die der Nutöffnung (22) zugekehrte zweite Kathete (28) die Stoßfläche (38) für die Druckschraube (40) erzeugt.

15. Profilstange nach Anspruch 14, dadurch gekennzeichnet, daß — im Querschnitt der Druckleiste (20) gesehen — das Fußstück (24) des flexiblen Lappens (47) in Richtung der ersten Kathete (27) des Dreiecks verlauft und sich daran, über einen Knick (65), das im wesentlichen senkrecht zur Hypotenuse (26) verlaufende Endstück (25) des Lappens (47) anschließt.

16. Profilstange nach Anspruch 14 oder 15, dadurch gekennzeichnet, daß — im Querschnitt der Druckleiste (20) gesehen — die Nase (23) aus der zweiten Kathete (28) des Dreiecks herausragt und parallel zur ersten Kathete (27) verläuft.

17. Profilstange nach Anspruch 16, dadurch gekennzeichnet, daß — im Querschnitt der Druckleiste (20) gesehen — die Nase (23) einerseits aus einem die parallelen Seitenflächen (45) aufweisenden Profilendstück (23") und andererseits aus einem demgegenüber verbreiterten an der zweiten Kathete (28) des Dreiecks sitzenden Profilfußstück (23') besteht.

18. Profilstange nach einem oder mehreren der Ansprüche 1 bis 17, dadurch gekennzeichnet, daß die Profilstange (10) an ihrer ins Möbelinnere gerichteten Innenseite (33) mit einer profilierten Deckschiene (70, 70', 70") verkleidet ist und die Deckschiene über Randteile (71 ; 86) im Bereich der Nut (12, 12') gehaltert ist (vergl. Fig. 3, 4, 8).

19. Profilstange nach einem oder mehreren der Ansprüche 1 bis 18, dadurch gekennzeichnet, daß der den einen U-Schenkel (110) bildende Teil einer in die Nut (12') einführbaren U-Profil-Schiene (106) gemäß einem Teil des Umrisses der Druckleiste (20) geformt und von der Druckschraube (40) in der Nut (12') festklemmbar ist (vergl. Fig. 8 bis 10).

**Claims**

1. Profile rod (10) for clamping sheets (11, 11'), in particular sheets of glass, for shop windows, sales counters, trade fair furniture or similar, including at least one long cut-out (12, 16) with two smooth profile walls (15, 30) which are at an angle to each other, whereby the one profile wall serves as the guiding surface (30) when a profiled thrust strip (20) which is wedge shaped in its cross section is moved by means of a bolt (40) fitted in the profile rod (10), whereby the thrust strip (20) has its area with the wedge tip (29) turned towards the base of the cut-out (12, 16) and is supported on this sliding surface (30) with one wedge surface which serves as the sliding surface (37) and the other wedge surface (36) of the thrust strip (20) serves as a parallel adjustable clamp surface (36) and forms with the other fixed profile wall a parallel groove (12, 12') of variable width for accepting one edge (13) of the sheet, characterised in that the inlet opening (32) of the groove (12) is limited by the free edge of a wall which runs from the guide surface (30), which with the guide surface (30) forms a triangular section extension of the groove (16) for accepting the wedge shaped thrust strip (20), that this wall is provided with continuous threaded holes (42) for a thrust bolt (40), this thrust bolt (40) presses onto a contact surface (38) which connects the two wedge surfaces (36, 37) of the thrust strip and whose direction of thrust (44) runs parallel (39) to the guide surface (30, 39), and that to secure the position of the thrust strip (20) the wedge section (22) is provided in the extension of the groove (16) with supporting mouldings (23, 47) in the area of the groove (12, 16) of which one moulding (23) is stiff in its form and is at least in part (23") parallel to the guide surface (30, 39) and fits into a complimentary cut-out (17) also parallel to the guide surface (30, 39) in the wall starting from the guide surface (30).

2. Profile rod in particular according to Claim 1, characterised in that the thrust strip (20) is constructed in zones (34, 35) of different metal, i. e. with a core zone (34) of a relatively hard material and with at least one edge zone (35) of a softer material (compare Fig. 2).

3. Profile rod according to Claim 2, characterised in that the profile strip (10) in its core and edge zone (34, 35) consists of two synthetic materials such as PVC with different Shore hardness levels and the two zones (34, 35) are glued or welded together at their contact point (51) to form a one-piece thrust strip (40).

4. Profile rod according to Claim 2 or 3, characterised in that the thrust strip (20) is produced by co-extrusion with its two zones (34, 35) including a coordinated parallel extrusion of both zones (34, 35) with a subsequent joining of the zones in a common tool which possesses the total cross-section (21) of the thrust strip (20).

5. Profile rod according to one or more of Claims 1 to 4, characterised in that the thrust strip (20) is held securely in position in the extension to the groove (16).

6. Profile rod according to one or more of Claims 1 to 5, characterised in that the one moulding (47) is formed as a flexible cloth (47) protruding out of the wedge shaped cross-section (22) of the thrust strip (20) which when fitted runs at least partly (25) across the groove (12, 12').

7. Profile rod according to one or more of Claims 2 to 6, characterised in that the cloth (47) forms an edge zone (35) consisting of a soft material and the wedge shaped cross-section (22) forms the core zone (34) of the thrust strip (20) which consists mainly of a hard material.

8. Profile rod according to Claim 6 or 7, characterised in that the cloth (47) runs in front of the base of the groove (18) and forms a particularly soft contact surface for the narrow edge of the sheet (11') inserted into the groove (12').

9. Profile rod according to Claim 6, 7 or 8, characterised in that the groove (12, 12') or its extension (16) is provided with a cut-out (67) in particular in the area of the base of the groove (18) in which (67) — when the thrust strip (20) is clamped to the sheet (11') — the flexible cloth is pressed in in certain areas (47').

10. Profile rod according to one or more of claims 6 to 9, characterised in that the cloth has an overlap (66) at its contact point (51) at the wedge shaped cross-section (22) of the thrust strip (20).

11. Profile rod according to one or more of Claims 6 to 10, characterised in that the cloth (47) at its point of use (51) in particular directed towards the tip of the wedge (29) possesses initially a foot section (24) which runs in the area of the outline of the wedge shaped base cross-section (22) and a free end section (25) of the cloth (47) joins onto the foot section (24), running across and in particular vertical to the clamp surface (36) of the wedge shaped cross-section (22).

12. Profile rod according to one or more of Claims 6 to 11, characterised in that — when the thrust strip (20) is clamped to the sheet (11') — the cloth (47) is moulded into a fold (47') in particular in the area of its overlap (66).

13. Profile rod according to one of Claims 1 to 12, characterised in that the moulding has a nose (23) which generally runs in the direction of thrust (44) of the thrust bolt (40) and possesses smooth side surfaces (49) which are in contact with the smooth flanks (46) of the gap (17) in which it is fitted.

14. Profile rod according to one or more of Claims 1 to 13, characterised in that the wedge shaped cross-section (22) of the thrust strip (20) is mainly designed as an equilateral triangle whereby the hypotenuse (26) produces the clamping surface (36) pressing against the sheet (11), the first side (27) turned towards the base of the groove (18) forms the sliding surface (37) along the sliding surface (30) of the profile rod (10) and the second side (28) turned towards the opening of the groove (22) forms the contact surface (38) for the thrust bolt (40).

15. Profile rod according to Claim 14, characterised in that — viewed in the cross-section of the thrust strip (20) — the foot section (24) of the flexible cloth (47) runs in the direction of the first side (27) of the triangle and joins, through a bend (65), the end section (25) of the cloth (47) which lies mainly vertical to the hypotenuse (26).

16. Profile rod according to Claim 14 or 15, characterised in that — viewed in the cross-section of the thrust strip (20) — the nose (23) protrudes out of the second side (28) of the triangle and runs parallel to the first side (27).

17. Profile rod according to Claim 16, characterised in that — viewed in the cross-section of the thrust strip (20) — the nose (23) on the one hand consists of a profile end section (23") which has parallel side surfaces (45) and on the other hand consists of the profile foot section (23') which is wider by comparison and fits on the second side (28) of the triangle.

18. Profile rod according to one or more of Claims 1 to 17, characterised in that the profile rod (10) is lined with a profile cover track (70, 70', 70") on its inside (33) directed towards the interior of the furniture and the cover track is held by peripheral parts (71, 86) in the area of the groove (12, 12') (compare Figs. 3, 4 and 8).

19. Profile rod according to one or more of Claims 1 to 18, characterised in that the part forming the one U leg (110) of a U profile track (106) which can be inserted into the groove (12') is formed according to a part of the outline of the thrust strip (20) and can be clamped by the thrust bolt (40) in the groove (12') (compare Figs. 8 to 10).

**Revendications**

1. Barre profilée (10) pour le serrage des plaques (11, 11'), surtout les plaques en verre, pour des vitrines, distributeurs de vente, mobilier d'exposition et objets semblables, comportant au moins un évidement longitudinal (12, 16) avec deux parois profilées (15, 30) planes, formant un angle l'une par rapport à l'autre, dont l'une sert de surface de guidage (30) lors du déplacement d'une barre de pression (20) profilée, d'une section en forme de clavette, au moyen d'une vis (40) qui peut être vissée dans la barre profilée (10), la zone de la barre de pression (20), présentant la pointe de clavette (29), étant tournée vers le fond de l'évidement (12, 16), la barre (20) s'appuyant, avec une possibilité de déplacement, sur cette surface de guidage (30), par sa surface de clavette servant de surface de glissement (37), l'autre surface de clavette (36) de la barre de pression (20) servant de surface de serrage (36), parallèlement ajustable, et formant, avec l'autre paroi profilée stationnaire, une rainure (12 ; 12') aux limites parallèles et de largeur variable, pour recevoir un rebord (13) de la plaque (11 ; 11'), caractérisée en ce que l'ouverture d'entrée (32) de la rainure (12) est limitée par le bord libre d'une paroi partant de la surface de guidage (30), cette paroi formant, avec la surface de guidage (30), un élargissement de rainure (16) profilé, triangulaire, prévu pour recevoir la barre de pression (20) en forme de clavette, en ce que cette paroi est munie de taraudages continus (42) pour une vis de pression (40), qui s'appuie sur une surface d'about (38), reliant les deux surfaces de clavette (36, 37) de la barre de pression, et dont le sens de pression (44) est parallèle (39) à la surface de guidage (30 ; 39), et en ce que la section de clavette (22) est munie de profils (23, 47) s'appuyant dans la zone rainurée (12 ; 16), en vue de garantir la position de la barre de pression (20) dans l'élargissement de rainure (16), l'un de ces profils (23) étant rigide et parallèle, dans une zone du moins (23'') à la surface de guidage (30 ; 39), et étant logé, avec un effet de guidage, dans un évidement complémentaire (17), également parallèle à la surface de guidage (30 ; 39) et disposé dans la paroi partant de la surface (30).

2. Barre profilée suivant la revendication 1 notamment, caractérisée en ce que la barre de pression (20) se compose de zones (34, 35) réalisées en matériaux différents, à savoir d'une zone centrale (34), composée d'un matériau relativement dur, et d'une zone de bordure au moins (35), composée d'un matériau plus souple (figure 2).

3. Barre profilée suivant la revendication 2, caractérisée en ce que la barre profilée (10) se compose, dans ses zones centrale et de bordure (34, 35), de matières plastiques de différentes duretés Shore, telles que PVC, les deux zones (34, 35) étant collées et/ou soudées à leur point de contact (51), et formant de ce fait une barre de pression monobloc (20).

4. Barre profilée suivant l'une des revendications 2 et 3, caractérisée en ce que la barre de pression (20), avec ses deux zones (34, 35), est obtenue par co-extrusion, par extrusion en parallèle et syntonisée des deux zones (34, 35), suivie d'un assemblage des zones dans un outil commun, présentant la section globale (21) de la barre de pression (20).

5. Barre profilée suivant l'une quelconque ou plusieurs des revendications 1 à 4, caractérisée en ce que la barre de pression (20) est positionnée et fixée dans l'élargissement de rainure (16).

6. Barre profilée suivant l'une quelconque ou plusieurs des revendications 1 à 5, caractérisée en ce que l'un des profils (47) est réalisé sous forme de languette flexible (47), dépassant de la section de base (22), en forme de clavette, de la barre de pression (20), et dont une section au moins (25) est transversale à la rainure (12, 12'), à l'état de montage.

7. Barre profilée suivant l'une quelconque ou plusieurs des revendications 2 à 6, caractérisée en ce que la languette (47) forme la zone de bordure (35), composée d'un matériau souple, la section de base (22) en forme de clavette constituant la zone centrale (34), essentiellement composée d'un matériau dur, de la barre de pression (20).

8. Barre profilée suivant l'une des revendications 6 et 7, caractérisée en ce que la languette (47) se situe devant le fond de la rainure (18), où elle forme une surface d'appui particulièrement souple pour le petit côté de la plaque (11'), introduit dans la rainure (12').

9. Barre profilée suivant l'une des revendications 6, 7 et 8, caractérisée en ce que la rainure (12, 12') et/ou son élargissement (16) est munie, dans la zone du fond de la rainure (18) notamment, d'un évidement (67) dans lequel est enfoncée une zone (47') de la languette flexible, à l'état de serrage de la barre de pression (20) sur la plaque (11').

10. Barre profilée suivant l'une quelconque ou plusieurs des revendications 6 à 9, caractérisée en ce que la languette présente une contre-dépouille (66), sur son point de contact (51) avec la section de base (22) en forme de clavette de la barre de pression (20).

11. Barre profilée suivant l'une quelconque ou plusieurs des revendications 6 à 10, caractérisée en ce que la languette (47) présente, sur son point de contact (51) tourné vers la pointe de clavette (29) notamment, une base (24) située sur le pourtour de la section de base (22) en forme de clavette, la base (24) étant prolongée par un bout libre (25) de la languette (47), situé à la transversale, à la perpendiculaire notamment de la surface de serrage (36) de la section de base (22) en forme de clavette.

12. Barre profilée suivant l'une quelconque ou plusieurs des revendications 6 à 11, caractérisée en ce que la languette (47) peut être déformée en un pli (47'), dans la zone de sa contre-dépouille (66) notamment, à l'état de serrage de la barre de pression (20) sur la plaque (11').

13. Barre profilée suivant l'une quelconque des revendications 1 à 12, caractérisée en ce que le profil est un talon (23), qui se situe essentiellement dans le sens de pression (44) de la vis (40) et présente des surfaces latérales planes (45), s'appuyant sur des flancs plans (46) de la fente (17) qui les reçoit.

14. Barre profilée suivant l'une quelconque ou plusieurs des revendications 1 à 13, caractérisée en ce que la section de base (22), en forme de clavette, de la barre de pression (20) est essentiellement représentée par un triangle rectangle isocèle, dont l'hypoténuse (26) constitue la surface de serrage (36), qui s'appuie contre la plaque (11), dont le premier côté de l'angle droit (27), tourné vers le fond de la rainure (18), forme la surface de glissement (37) guidée, dans le sens longitudinal, sur la surface de guidage (30) de la barre profilée (10), et dont le second côté de l'angle droit (28), tourné vers l'ouverture de la rainure (22), constitue la surface d'about (38) pour la vis de pression (40).

15. Barre profilée suivant la revendication 14, caractérisée en ce que, vu en coupe transversale de la barre de pression (20), la base (24) de la languette flexible (47) se situe dans le sens du premier côté de l'angle droit (27) du triangle, et se prolonge, par l'intermédiaire d'un coude (65), par un bout (25) de la languette (47), essentiellement perpendiculaire à l'hypoténuse (26).

16. Barre profilée suivant l'une des revendications 14 et 15, caractérisée en ce que, vu en coupe transversale de la barre de pression (20), le talon (23) dépasse du second côté de l'angle droit (28) du triangle et se situe à la parallèle du premier côté de l'angle droit (27).

17. Barre profilée suivant la revendication 16, caractérisée en ce que, vu en coupe transversale de la barre de pression (20), le talon (23) se compose d'un bout profilé (23''), qui présente les surfaces latérales parallèles (45), d'une part, d'une base profilée (23') élargie, qui s'appuie sur le second côté de l'angle droit (28) du triangle, d'autre part.

18. Barre profilée suivant l'une quelconque ou plusieurs des revendications 1 à 17, caractérisée en ce que la barre profilée (10) est revêtue d'un rail de couverture profilé (70, 70', 70''), sur sa face interne (33) tournée vers l'intérieur du meuble, le rail de couverture étant fixé dans la zone de la rainure (12, 12') par des pièces de bordure (71 ; 86) (figures 3, 4, 8).

19. Barre profilée suivant l'une quelconque ou plusieurs des revendications 1 à 18, caractérisée en ce que la section, formant l'un des côtés en U (110) d'un rail profilé en U (106), qui peut être introduit dans la rainure (12'), est formée conformément à une partie du profil de la barre de pression (20) et peut être bloquée par la vis de pression (40) dans la rainure (12') (figures 8 à 10).

FIG.1

FIG.2

FIG.3

FIG.4

EP 0 200 760 B1

FIG.6

FIG.7

FIG.5

*FIG.8*

*FIG.9*

*FIG.10*

*FIG. 11*

*FIG.12*

*FIG.13*

*FIG.14*